# EUROPEAN PATENT APPLICATION

(11) **EP 4 654 353 A1**
(43) Date of publication of application: **26.11.2025**
(21) Application number: 23939159.2
(22) Date of filing: 28.08.2023
(51) Int. Cl.: H01M 50/244, H01M 50/249, H01M 50/367, H01M 50/392

(54) **BATTERY, ELECTRIC APPARATUS, AND ENERGY STORAGE DEVICE**

(30) Priority: 29.05.2023 CN 202321318601 U
(71) Applicant: Contemporary Amperex Technology Co., Limited, Ningde, Fujian 352100 (CN)
(72) Inventor: WU, Kai, Ningde, Fujian 352100 (CN); HU, Lu, Ningde, Fujian 352100 (CN); CHEN, Xiaobo, Ningde, Fujian 352100 (CN); CHAI, Jing, Ningde, Fujian 352100 (CN); WANG, Xuehui, Ningde, Fujian 352100 (CN)
(74) Representative: Kraus & Lederer PartGmbB
(86) International application number: PCT/CN2023/115235
(87) International publication number: WO 2024/244183

(57) **Abstract**

The present application provides a battery, an electrical apparatus, and an energy storage device and relates to the technical field of batteries. The battery includes a battery cell, a box, and a treatment mechanism. The box is used for accommodating the battery cell. The box has an exhaust hole used for discharging emissions generated by thermal runaway of the battery cell. The treatment mechanism is arranged at the box, and is used for reducing the mass flow of the combustibles in the emissions through the exhaust hole. The treatment mechanism can treat the emissions generated by thermal runaway of the battery cell, so as to reduce the mass flow of the combustibles in the emissions through the exhaust hole, thereby reducing the mass flow of the combustibles in the emissions discharged out of the box, so that the concentration of the combustibles in the emissions in the air can be effectively reduced during diffusion of the emissions in the air, so as to alleviate the phenomenon of fire and combustion due to excessive concentration of the combustibles in the air, which is beneficial for reducing the use risk of the battery during use to improve the reliability of the battery.

## Description

### CROSS-REFERENCE TO RELATED APPLICATION

The present application claims priority to Chinese patent application 2023213186018 filed on May 29, 2023 and entitled "BATTERY, ELECTRICAL APPARATUS, AND ENERGY STORAGE DEVICE", which is incorporated herein by reference in its entirety.

### TECHNICAL FIELD

The present application relates to the technical field of batteries, and in particular, to a battery, an electrical apparatus, and an energy storage device.

### BACKGROUND

In recent years, new energy vehicles have made a leap forward in development. In the field of electric vehicles, power batteries, as the power source of electric vehicles, play an irreplaceable and important role. With the vigorous promotion of new energy vehicles, the demand for power battery products is also growing. Among them, batteries are of great significance in energy storage and supply. However, batteries also have high use requirements for safety in use. However, during the use of a battery, the battery cell in the battery often experiences thermal runaway due to abnormal causes such as weather, aging, overcharging, etc. The emissions generated by thermal runaway of the battery cell are very likely to experience the phenomenon of fire and combustion after being discharged from the battery, and may even cause risks of fire and explosion of the battery, resulting in low reliability of the battery during use.

### SUMMARY OF THE INVENTION

Embodiments of the application provide a battery, an electric apparatus, and an energy storage device, which can effectively improve the reliability of the battery during use.

In a first aspect, an embodiment of the present application provides a battery, including a battery cell, a box, and a treatment mechanism; the box is used for accommodating the battery cell and has an exhaust hole, the exhaust hole is configured to discharge emissions generated by thermal runaway of the battery cell; and the treatment mechanism is arranged in the box and is used for reducing the mass flow of combustibles in the emissions through the exhaust hole.

In the above technical solution, the battery is provided with a treatment mechanism, which can treat the emissions generated by thermal runaway of the battery cell in the box, so as to reduce the mass flow of the combustibles in the emissions through the exhaust hole, thereby reducing the mass flow of the combustibles in the emissions discharged out of the box, so that the concentration of the combustibles in the emissions in the air can be effectively reduced during diffusion of the emissions in the air, so as to alleviate the phenomenon of fire and combustion due to excessive concentration of the combustibles in the air, which is beneficial for reducing the use risk of the battery during use to improve the reliability of the battery.

In some embodiments, the treatment mechanism includes a flow limiting unit; and the flow limiting unit is arranged at the box and used for controlling the flow of the emissions through the exhaust hole to reduce the mass flow of the combustibles in the emissions through the exhaust hole.

In the above technical solution, the treatment mechanism includes a flow limiting unit arranged on the box, which can control and limit the flow of the emissions in the box discharged out of the box through the exhaust hole, thereby reducing the mass flow of the combustibles in the emissions through the exhaust hole, so as to alleviate the phenomenon of excessive concentration of the combustibles during diffusion in the air after being discharged out of the box, thereby reducing the risks of fire and combustion due to excessive concentration of the combustibles.

In some embodiments, the flow limiting unit includes a throttle valve arranged at the exhaust hole.

In the above technical solution, the flow limiting unit may be a throttle valve arranged at the exhaust hole, which can control and limit the flow of the emissions in the box discharged out of the box through the exhaust hole, so as to reduce the mass flow of the combustibles in the emissions through the exhaust hole, which allows a simple structure and easy control.

In some embodiments, the flow limiting unit includes a gas storage member; and the gas storage member is in communication with the interior of the box and configured to buffer the emissions generated by thermal runaway of the battery cell to control the flow of the emissions through the exhaust hole.

In the above technical solution, the flow limiting unit may include a gas storage member in communication with an internal space of the box, which can buffer the emissions generated by thermal runaway of the battery cell in the box to reduce the air pressure in the box, thereby regulating the pressure difference between the interior and exterior of the box to reduce the flow of the emissions in the box discharged out of the box through the exhaust hole, thereby effectively reducing the mass flow of the combustibles in the emissions through the exhaust hole, which allows a simple structure and easy implementation.

In some embodiments, the flow limiting unit further includes a switch valve and a detection member; the switch valve is arranged at the exhaust hole and configured to open or close the exhaust hole; the detection member is configured to detect the flow of the emissions through the exhaust hole; when the flow of the emissions is greater than a threshold, the switch valve closes the exhaust hole, and the gas storage member is opened and buffers the emissions; and when the flow of the emissions is less than or equal to the threshold, the switch valve opens the exhaust hole.

In the above technical solution, the flow limiting unit is further provided with a switch valve and a detection member used in conjunction with the gas storage member. The detection member can detect the flow of the emissions discharged out of the box through the exhaust hole, so that the switch valve can be opened or closed according to the detection result of the detection member, and the gas storage member can be opened when the switch valve is closed to buffer the emissions in the box, thereby accurately controlling and reducing the flow of the emissions through the exhaust hole, so as to control and reduce the mass flow of the combustibles in the emissions through the exhaust hole.

In some embodiments, the treatment mechanism includes a treatment unit; and the treatment unit is arranged in the box and configured to reduce the content of the combustibles in the emissions, so as to reduce the mass flow of the combustibles in the emissions through the exhaust hole.

In the above technical solution, the treatment mechanism includes a treatment unit arranged in the box, which can treat the emissions generated by thermal runaway of the battery cell in the box to reduce the content of the combustibles in the emissions in the box, thereby reducing the mass flow of the combustibles in the emissions through the exhaust hole by reducing the content of the combustibles, so as to alleviate the phenomenon of excessive concentration of the combustibles during diffusion in the air after being discharged out of the box, thereby reducing the risks of fire and combustion due to excessive concentration of the combustibles.

In some embodiments, the treatment unit is configured to adsorb the combustibles in the emissions; and/or, the treatment unit is configured to oxidize and reduce the combustibles in the emissions.

In the above technical solution, the flow limiting unit can intercept or transform the combustibles in the emissions into non-combustible substances through adsorption, oxidation-reduction, or other treatments to remove or reduce the combustibles in the emissions, thereby reducing the content of the combustibles in the emissions, which allows a simple structure and easy implementation.

In some embodiments, along the direction of the central axis of the exhaust hole, at least a part of the treatment unit is located between the battery cell and the exhaust hole.

In the above technical solution, by arranging at least a part of the treatment unit between the battery cell and the exhaust hole in the direction of the central axis of the exhaust hole, at least a part of the flow limiting unit is arranged on a discharge path for the emissions, so that the emissions generated by thermal runaway of the battery cell need to pass through the treatment unit before being discharged out of the box through the exhaust hole, which is beneficial for improving the treatment effect of the treatment unit on the emissions.

In some embodiments, the battery includes a plurality of battery cells, and the treatment unit is arranged to surround the plurality of battery cells.

In the above technical solution, providing the treatment unit as a structure surrounding an outer side of the plurality of battery cells is beneficial for increasing the contact area between the treatment unit and the emissions discharged by the battery cells, which is beneficial for further improving the treatment effect of the treatment unit on the emissions.

In some embodiments, the treatment mechanism is used for reducing the mass flow of the combustibles in the emissions through the exhaust hole to a preset value or below, and the preset value is 0.05g/s.

In the above technical solution, the treatment mechanism can reduce the mass flow of the combustibles in the emissions through the exhaust hole to less than or equal to 0.05g/s, so that the mass flow of the combustibles in the emissions in the battery that is discharged out of the box is less than or equal to 0.05g/s, so that when the emissions diffuse in the air, the concentration of the combustibles at any position in the air can be less than 2%, so that the combustibles discharged out of the box are outside the combustion limit range, thereby effectively alleviating the phenomenon of fire and combustion of the emissions after being discharged out of the box, which is beneficial for reducing the use risk of the battery during use to improve the reliability of the battery.

In a second aspect, an embodiment of the present application further provides an electrical apparatus, which includes the battery described above, and the battery is used for providing electric energy.

In a third aspect, an embodiment of the present application further provides an energy storage device, which includes a plurality of the batteries described above.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle provided in some embodiments of the present application;
FIG. 2 is an exploded structural view of a battery provided in some embodiments of the present application;
FIG. 3 is a schematic structural view of a vehicle provided in some other embodiments of the present application; and
FIG. 4 is a sectional view of a battery provided in some embodiments of the present application.

Reference numerals: 1000-vehicle; 100-battery; 10-box; 11-exhaust hole; 12-first box body; 13-second box body; 20-battery cell; 30-treatment mechanism; 31-flow limiting unit; 311-gas storage member; 312-switch valve; 32-treatment unit; 200-controller; 300-motor.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, the battery cell may be a secondary battery. The secondary battery refers to a battery cell that, after being discharged, can continue to be used by having the active material activated through charging.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, or the like, which is not limited in the embodiments of the present application.

In some embodiments, the battery cell may include a shell. The shell is used for encapsulating components, such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square-shell battery cell, a blade-shaped battery cell, and a polygon prism battery. For example, the polygon prism battery may be a hexagonal prism battery.

A battery mentioned in the embodiments of the present application refers a single physical module including one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or the battery module is accommodated in the box.

In some embodiments, the box may be a part of a vehicle chassis structure. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus includes an energy storage container, an energy storage cabinet, or the like.

The battery has outstanding advantages such as high energy density, low environmental pollution, high power density, long service life, wide adaptable range, and low self-discharge coefficient, making it an important component of today's new energy development.

For general batteries, the battery usually includes a box and a battery cell accommodated in the box. During the use of the battery, the battery cell in the battery often experiences thermal runaway due to abnormal causes such as weather, aging, overcharging, etc., generating a great amount of thermal runaway gas which contains a great amount of combustible gases and combustible particles. Therefore, in order to reduce the use risk of the battery, the related technology usually discharges the thermal runaway gases generated by the battery cell out of the battery box. However, in a battery of such structure, the thermal runaway gases generated by the battery cell are discharged out of the box at a relatively fast rate, causing the concentrations of combustible gases and combustible particles in the thermal runaway gases in the air to increase rapidly during diffusion of the thermal runaway gases in the air. This can easily cause phenomenon of fire and combustion of the thermal runaway gases after being discharged out of the box, and can even cause the risks of fire and explosion of the battery, resulting in low reliability of the battery during use.

Based on the above considerations, in order to solve the problem of low reliability of the battery during use, an embodiment of the present application provides a battery, which includes a battery cell, a box, and a treatment mechanism. The box is used for accommodating the battery cell. The box has an exhaust hole configured to discharge emissions generated by thermal runaway of the battery cell. The treatment mechanism is arranged at the box, and is used for reducing the mass flow of the combustibles in the emissions through the exhaust hole.

For a battery of such structure, the battery is provided with a treatment mechanism, which can treat the emissions generated by thermal runaway of the battery cell in the box, so as to reduce the mass flow of the combustibles in the emissions through the exhaust holes, thereby reducing the mass flow of the combustibles in the emissions discharged out of the box, so that the concentration of the combustibles in the emissions in the air can be effectively reduced during diffusion of the emissions in the air, so as to alleviate the phenomenon of fire and combustion due to excessive concentration of the combustibles in the air, which is beneficial for reducing the use risk of the battery during use to improve the reliability of the battery.

The battery disclosed in the embodiments of the present application can be used, without limitation, in an electrical apparatus, such as a vehicle, a ship, or an aircraft. The power supply system of the electrical apparatus can be composed of the battery disclosed in the present application, and the energy storage device for energy storage can also be composed of the battery disclosed in the present application. This is beneficial for alleviating the risks of fire and explosion of the battery during use, so as to improve the reliability of the battery during use.

An embodiment of the present application provides an electrical apparatus using a battery as a power source. The electrical apparatus may be, but is not limited to, a mobile phone, a tablet, a laptop, an electric toy, an electric tool, a battery vehicle, an electric vehicle, a ship, a spacecraft, etc. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000 according to an embodiment of the present application is taken as an example for the description.

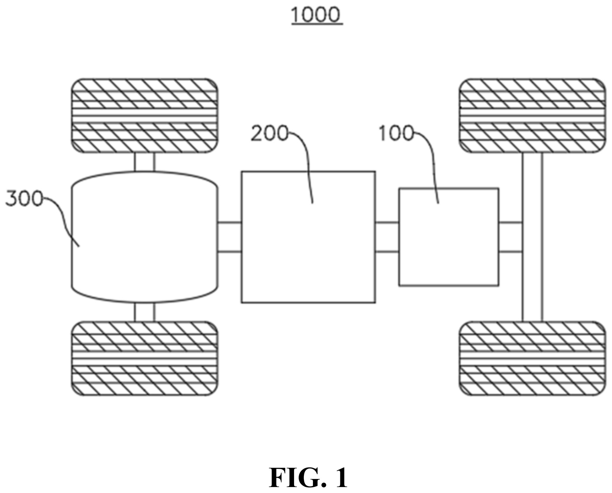

Referring to FIG. 1, FIG. 1 is a schematic structural view of a vehicle 1000 provided in some embodiments of the present application. The vehicle 1000 may be a fuel vehicle, a gas vehicle, or a new energy vehicle. The new energy vehicle may be an all-electric vehicle, a hybrid vehicle, an extended-range vehicle, or the like. A battery 100 is provided in the vehicle 1000. The battery 100 may be arranged at the bottom of the vehicle 1000, or the head of the vehicle 1000, or the tail of the vehicle 1000. The battery 100 may be used for supplying power to the vehicle 1000. For example, the battery 100 may be used as an operating power source or usage power source for the vehicle 1000. The vehicle 1000 may further include a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, the battery 100 can not only be used as the operating power source for the vehicle 1000, but also as the driving power source for the vehicle 1000, to replace or partially replace fuel or natural gas to provide driving power for the vehicle 1000.

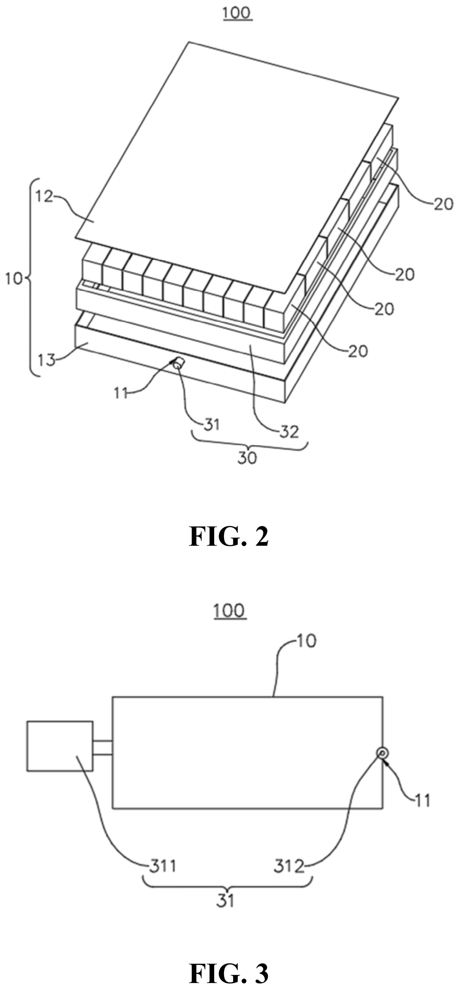

According to some embodiments of the present application, and referring to FIG. 2, FIG. 2 is a structural exploded view of a battery 100 provided in some embodiments of the present application. The present application provides a battery 100. The battery 100 includes a box 10, a battery cell 20, and a treatment mechanism 30. The box 10 is used for accommodating the battery cell 20. The box 10 has an exhaust hole 11 configured to discharge emissions generated by thermal runaway of the battery cell 20. The treatment mechanism 30 is arranged at the box 10, and is used for reducing the mass flow of the combustibles in the emissions through the exhaust hole 11.

Here, the box 10 is used for providing an assembly space for the battery cell 20, and the box 10 may be of a variety of structures. In some embodiments, the box 10 may include a first box body 12 and a second box body 13. The first box body 12 and the second box body 13 are covered by each other, and the first box body 12 and the second box body 13 together define an assembly space for accommodating the battery cell 20. The second box body 13 may be of a hollow structure with one end open, the first box body 12 may be of a plate-like structure, and the first box body 12 covers the open side of the second box body 13, so that the first box body 12 and the second box body 13 together define the assembly space. Alternatively, both of the first box body 12 and the second box body 13 may be of a hollow structure with one side open, and the open side of the first box body 12 covers the open side of the second box body 13. Of course, the box 10 formed by the first box body 12 and the second box body 13 may be of a variety of shapes, such as a cylinder, a cuboid, etc. By way of example, in FIG. 2, the box 10 is of a cuboid shape.

Optionally, the exhaust hole 11 may be arranged on the first box body 12, or may be arranged on the second box body 13. By way of example, in FIG. 2, the exhaust hole 11 is arranged on the second box body 13.

In the battery 100, one battery cell 20 or a plurality of battery cells 20 may be arranged in the box 10. If a plurality of battery cells 20 are arranged in the box 10, the plurality of battery cells 20 may be connected in series or parallel or in hybrid connection, where the hybrid connection means that some of the plurality of battery cells 20 are connected in series and some are connected in parallel. The plurality of battery cells 20 may be directly connected in series or in parallel or in hybrid connection, and then the entirety formed by the plurality of battery cells 20 is accommodated in the box 10; of course, the battery 100 may also be in a form of a battery module formed by connecting the plurality of battery cells 20 in series or in parallel or in hybrid connection, and then a plurality of battery modules are connected in series or in parallel or in hybrid connection into an entirety and accommodated in the box 10. The battery 100 may further include other structures, for example, the battery 100 may further include a busbar component to connect the plurality of battery cells 20, so as to realize the electrical connection between the plurality of battery cells 20.

Here, each battery cell 20 may be a secondary battery or a primary battery; or it may be, but is not limited to, a lithium-sulfur battery, a sodium-ion battery, or a magnesium-ion battery. The battery cell 20 may be of a cylinder shape, a flat body shape, a cuboid shape, or other shapes. By way of example, in FIG. 2, the battery cell 20 is of a cuboid shape.

The box 10 has an exhaust hole 11, which is configured to discharge emissions generated by thermal runaway of the battery cell 20, that is, the exhaust hole 11 arranged on the box 10 can provide communication between the interior and the exterior of the box 10, so that the emissions generated by thermal runaway of the battery cell 20 located in the box 10 can be discharged out of the box 10.

The treatment mechanism 30 is arranged at the box 10, that is, the treatment mechanism 30 may be arranged on the box 10, or may be arranged inside or outside the box 10.

The treatment mechanism 30 is used for reducing the mass flow of the combustibles in the emissions through the exhaust hole 11, that is, the treatment mechanism 30 can reduce the mass flow of the combustibles in the emissions discharged out of the box 10. The treatment mechanism 30 may be of a variety of structures, where it may reduce the mass flow of the combustibles in the emissions through the exhaust hole 11 by controlling the discharge rate of the emissions, or it may reduce the mass flow of the combustibles in the emissions through the exhaust hole 11 by reducing the content of the combustibles in the emissions.

Mass flow refers to the mass of fluid passing through the effective section of a closed pipe or an open slot per unit time. In the embodiments of the present application, the mass flow of the combustibles through the exhaust hole 11 is the mass of fluid of the combustibles passing through the effective section of the exhaust hole 11.

It should be noted that the emissions are a mixed gas, which contains combustible and non-combustible substances. Here, the non-combustible substances in the emissions may be carbon dioxide, etc., and the combustibles in the emissions include one or more of hydrogen, methane, ethylene, carbon monoxide, or electrolyte vapor, etc.

The battery 100 is provided with a treatment mechanism 30, which can treat the emissions generated by thermal runaway of the battery cell 20 in the box 10, so as to reduce the mass flow of the combustibles in the emissions through the exhaust hole 11, thereby reducing the mass flow of the combustibles in the emissions discharged out of the box 10, so that the concentration of the combustibles in the emissions in the air can be effectively reduced during diffusion of the emissions in the air, so as to alleviate the phenomenon of fire and combustion due to excessive concentration of the combustibles in the air, which is beneficial for reducing the use risk of the battery 100 during use to improve the reliability of the battery 100.

According to some embodiments of the present application, and referring to FIG. 2, the treatment mechanism 30 may include a flow limiting unit 31, and the flow limiting unit 31 is arranged in the box 10 and used for controlling the flow of the emissions through the exhaust hole 11 to reduce the mass flow of the combustibles in the emissions through the exhaust hole 11.

Here, the treatment mechanism 30 is provided with a flow limiting unit 31, and the flow limiting unit 31 is used for controlling the flow of the emissions through the exhaust hole 11, that is, the treatment mechanism 30 reduces the mass flow of the combustibles in the emissions through the exhaust hole 11 by controlling the discharge rate of the emissions through the flow limiting unit 31.

The flow limiting unit 31 serves to regulate the flow of the emissions through the exhaust hole 11. The flow limiting unit 31 may be of a variety of configurations. By way of example, the flow limiting unit 31 may be a throttle valve arranged at the exhaust hole 11, and the flow of the emissions through the exhaust hole 11 can be directly regulated by the throttle valve. It may also be an air pressure regulation apparatus in communication with the interior of the box 10, and the air pressure in the box 10 can be regulated by the air pressure regulation apparatus to regulate the flow of the emissions through the exhaust hole 11.

The treatment mechanism 30 includes a flow limiting unit 31 arranged on the box 10, which can control and limit the flow of the emissions in the box 10 discharged out of the box 10 through the exhaust hole 11, thereby reducing the mass flow of the combustibles in the emissions through the exhaust hole 11, so as to alleviate the phenomenon of excessive concentration of the combustibles during diffusion in the air after being discharged out of the box 10, thereby reducing the risks of fire and combustion due to excessive concentration of the combustibles.

According to some embodiments of the present application, and referring to FIG. 2, the flow limiting unit 31 includes a throttle valve arranged at the exhaust hole 11.

Here, the flow limiting unit 31 is a throttle valve arranged at the exhaust hole 11, and it may be of a variety of structures, for example, a straight-through throttle valve, an angle throttle valve, or the like.

The flow limiting unit 31 may be a throttle valve arranged at the exhaust hole 11, which can control and limit the flow of the emissions in the box 10 discharged out of the box 10 through the exhaust hole 11, so as to reduce the mass flow of the combustibles in the emissions through the exhaust hole 11, which allows a simple structure and easy control.

Of course, the structure of the flow limiting unit 31 is not limited thereto, and the flow limiting unit 31 may also be of other structures. According to some embodiments of the present application, and referring to FIG 3, FIG. 3 is a schematic structural view of a battery 100 provided in some other embodiments of the present application. The flow limiting unit 31 may include a gas storage member 311 in communication with the interior of the box 10. The gas storage member 311 is configured to buffer the emissions generated by thermal runaway of the battery cell 20 to control the flow of the emissions through the exhaust hole 11.

Here, the flow limiting unit 31 is provided with a gas storage member 311, which can buffer the emissions generated by thermal runaway of the battery cell 20 in the box 10 to reduce and regulate the air pressure in the box 10, thereby achieving the effect of controlling the flow of the emissions through the exhaust hole 11.

By way of example, the gas storage member 311 may be a closed container that is communication with the interior of the box 10 and is used for buffering the emissions generated by thermal runaway of the battery cell 20. By opening the gas storage member 311, the emissions in the box 10 can be buffered, thereby reducing the air pressure in the box 10. For example, it may be a flexible airbag, a negative pressure gas tank, or the like.

The flow limiting unit 31 may include a gas storage member 311 in communication with an internal space of the box 10, which can buffer the emissions generated by thermal runaway of the battery cell 20 in the box 10 to reduce the air pressure in the box 10, thereby adjusting the pressure difference between the interior and exterior of the box 10 to reduce the flow of the emissions in the box 10 discharged out of the box 10 through the exhaust hole 11, thereby effectively reducing the mass flow of the combustibles in the emissions through the exhaust hole 11, which allows a simple structure and easy implementation.

In some embodiments, with continued reference to FIG. 3, the flow limiting unit 31 may further include a switch valve 312 and a detection member (not shown in the figure). The switch valve 312 is arranged at the exhaust hole 11, and the switch valve 312 is configured to open or close the exhaust hole 11. The detection member is configured to detect the flow of the emissions through the exhaust hole 11. When the flow of the emissions is greater than a threshold, the switch valve 312 closes the exhaust hole 11, and the gas storage member 311 is opened and buffers the emissions; and when the flow of the emissions is less than or equal to the threshold, the switch valve 312 opens the exhaust hole 11.

Here, the detection member serves to detect the flow of the emissions generated by thermal runaway of the battery cell 20 in the box 10 through the exhaust hole 11, so that it can feed back a detection signal to the control system to control the actions of the gas storage member 311 and the switch valve 312 through the control system.

By way of example, the detection member may be of a variety of structures. For example, the detection member may be a differential pressure flow meter, a float flow meter, or the like.

By way of example, the switch valve 312 may also be of a variety of structures. For example, the switch valve 312 may be an electric valve, a solenoid valve, or the like.

The flow limiting unit 31 is further provided with a switch valve 312 and a detection member used in conjunction with the gas storage member 311. The detection member can detect the flow of the emissions discharged out of the box 10 through the exhaust hole 11, so that the switch valve 312 can be opened or closed according to the detection result of the detection member, and the gas storage member 311 can be opened when the switch valve 312 is closed to buffer the emissions in the box 10, thereby accurately controlling and reducing the flow of the emissions through the exhaust hole 11, so as to control and reduce the mass flow of the combustibles in the emissions through the exhaust hole 11.

According to some embodiments of the present application, and referring to FIG. 2, the treatment mechanism 30 may include a treatment unit 32. The treatment unit 32 is arranged in the box 10 and configured to reduce the content of the combustibles in the emissions so as to reduce the mass flow of the combustibles in the emissions through the exhaust hole 11.

Here, the treatment unit 32 serves to treat the combustibles in the emissions to reduce the content of the combustibles in the emissions, and the emissions discharged by thermal runaway of the battery cell 20 are a mixed gas, and the emissions contain combustible substances and non-combustible substances, where the combustibles in the emissions include one or more of hydrogen, methane, carbon monoxide, electrolyte vapor, or electrolyte droplets, etc., so that the mass flow of the combustibles in the emissions through the exhaust hole 11 is reduced when the emissions pass through the exhaust hole 11 at the same flow by reducing the content of the combustibles in the emissions through the treatment unit 32.

Optionally, the treatment unit 32 can treat the combustibles in the emissions in a variety of ways, including for example, reducing the content of the combustibles in the emissions by filtering and adsorbing, catalytic reaction, burning the combustibles, or the like.

It should be noted that, in FIG. 2, a flow limiting unit 31 is provided on the box 10 of the battery 100, and the flow limiting unit 31 is a throttle valve arranged at the exhaust hole 11, while a treatment unit 32 is provided inside the box 10. Of course, in some embodiments, the battery 100 may alternatively be provided only with the flow limiting unit 31 or only with the treatment unit 32.

The treatment mechanism 30 includes a treatment unit 32 arranged in the box 10, which can treat the emissions generated by thermal runaway of the battery cell 20 in the box 10 to reduce the content of the combustibles in the emissions in the box 10, thereby reducing the mass flow of the combustibles in the emissions through the exhaust hole 11 by reducing the content of the combustibles, so as to alleviate the phenomenon of excessive concentration of the combustibles during diffusion in the air after being discharged out of the box 10, thereby reducing the risks of fire and combustion due to excessive concentration of the combustibles.

In some embodiments, the treatment unit 32 is configured to adsorb the combustibles in the emissions; and/or the treatment unit 32 is configured to oxidize and reduce the combustibles in the emissions.

Here, when the treatment unit 32 is configured to adsorb the combustibles in the emissions, the treatment unit 32 may be a solid-phase adsorption structure or a liquid-phase adsorption structure, that is, some combustibles in the emissions, such as electrolyte vapor, can be adsorbed when passing through the solid-phase adsorption structure or the liquid-phase adsorption structure. By way of example, when the treatment unit 32 is a solid-phase adsorption structure, the treatment unit 32 may be a porous adsorption structure, such as a molecular sieve or foam, or may be a porous structure with an adsorbent attached thereto, such as a porous structure with an adsorbent such as activated carbon or adsorbent cotton attached thereto, where the porous structure may be a metal mesh, metal cotton, foam, or the like; and when the treatment unit 32 is a liquid-phase adsorption structure, the treatment unit 32 may be a structure containing water or a liquid containing an oxidant.

When the treatment unit 32 is configured to oxidize and reduce the combustibles in the emissions, the treatment unit 32 may be a porous structure with a catalyst and an oxidant attached thereto, where the porous structure may be a metal mesh, metal wool, foam, or the like, the catalyst may be a precious metal catalyst, such as palladium, platinum, rhodium, or the like, and the oxidant may be copper oxide, sodium peroxide, potassium permanganate, or the like. The treatment unit 32 can catalyze the oxidation-reduction reaction of the combustibles in the emissions to form non-combustible substances, including, for example, catalyzing the reaction of hydrogen and carbon monoxide in the emissions to form non-combustible water and carbon dioxide.

The flow limiting unit 31 can intercept or transform the combustibles in the emissions into non-combustible substances through adsorption or oxidation-reduction treatments to remove or reduce the combustibles in the emissions, thereby reducing the content of the combustibles in the emissions, which allows a simple structure and easy implementation.

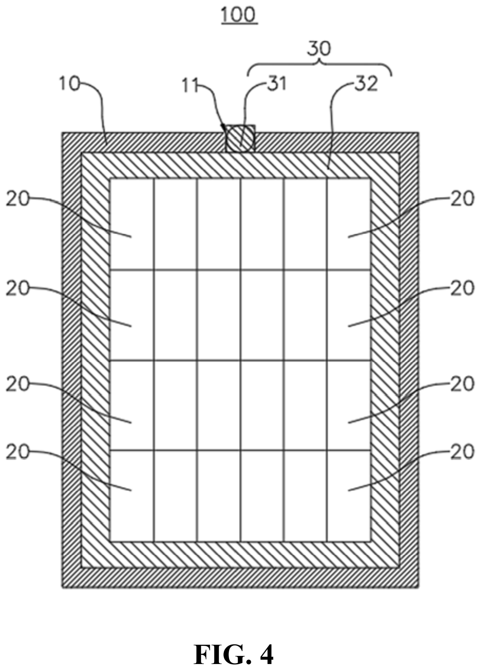

According to some embodiments of the present application, referring to FIG. 2 and further to FIG. 4, FIG. 4 is a sectional view of a battery 100 provided in some embodiments of the present application. Along the direction of the central axis of the exhaust hole 11, at least a part of the treatment unit 32 is located between the battery cell 20 and the exhaust hole 11.

Here, along the direction of the central axis of the exhaust hole 11, at least a part of the treatment unit 32 is located between the battery cell 20 and the exhaust hole 11, that is, the projection of the exhaust hole 11 in the direction of its central axis overlaps with at least a part of the treatment unit 32.

By way of example, in FIG. 4, the projection of the exhaust hole 11 in the direction of its central axis is located within the treatment unit 32, so that the emissions generated by thermal runaway of the battery cell 20 first pass through the treatment unit 32 and then through the exhaust hole 11.

By arranging at least a part of the treatment unit 32 between the battery cell 20 and the exhaust hole 11 in the direction of the central axis of the exhaust hole 11, at least a part of the flow limiting unit 31 is arranged on a discharge path for the emissions, so that the emissions generated by thermal runaway of the battery cell 20 need to pass through the treatment unit 32 before being discharged out of the box 10 through the exhaust hole 11, thereby facilitating improving the treatment effect of the treatment unit 32 on the emissions.

In some embodiments, with continued reference to FIGS. 2 and 4, the battery 100 includes a plurality of battery cells 20, and the treatment unit 32 is arranged to surround the plurality of battery cells 20. That is to say, the treatment unit 32 is of an annular structure, and the treatment unit 32 surrounds an outer side of the plurality of battery cells 20.

Providing the treatment unit 32 as a structure surrounding an outer side of the plurality of battery cells 20 is beneficial for increasing the contact area between the treatment unit 32 and the emissions discharged by the battery cells 20, which is beneficial for further improving the treatment effect of the treatment unit 32 on the emissions.

According to some embodiments of the present application, the treatment mechanism 30 is used for reducing the mass flow of the combustibles in the emissions through the exhaust hole 11 to a preset value or below, and the preset value is 0.05g/s.

Here, the treatment mechanism 30 is used for reducing the mass flow of the combustibles in the emissions through the exhaust hole 11 to a preset value or below, that is, the mass flow of the combustibles in the emissions discharged by the battery cell 20 through the exhaust hole 11 is reduced to less than or equal to 0.05g/s through the treatment mechanism 30, so that when the combustibles follow the mixed gas of the emissions to diffuse in the air, the concentration of the combustibles at any position in the air is less than 2%, so that the combustibles are outside the combustible limit range after mixing with the air, that is, the combustibles after mixing with the air are below the lower combustion limit, so that the combustibles will not be ignited.

For example, taking lithium iron phosphorus battery as an example, the main components of the emissions generated by the lithium iron phosphorus battery after thermal runaway are as follows:

| Runaway gas components | Content/% |
|---|---|
| CO₂ | 12.3 |
| H₂ | 47.8 |
| CH₄ | 2.1 |
| CO | 2.25 |
| C₂H₄ | 4 |
| C₃H₈ | 1.55 |
| Electrolyte vapor | 30 |

The Flacs fluid simulation software is used to build a leakage model (Flacs-jet) to simulate the diffusion model of the combustibles in the emissions in the air after passing through the exhaust hole 11 (it can simulate the diffusion of the emissions and output the gas concentration during the diffusion process), so as to simulate the concentration distribution and variation of the combustibles in the air.

The simulation results show that when the mass flow of the combustibles is lower than 0.05g/s (i.e. ≤0.00125mol/s, 0.02L/s@25°C), as the combustibles diffuse in the air, the concentration of the combustibles in the air is less than 2% at any position, which is outside the combustible limit range, so that the combustibles will not be ignited and burned.

Here, taking lithium iron phosphorus battery as an example, the content and combustible limit of main components of the emissions generated by the lithium iron phosphorus battery after thermal runaway are as follows:

| Runaway gas components | Content/% | Combustible limit/% |
|---|---|---|
| CO₂ | 12.3 | / |
| H₂ | 47.8 | 4.0 |
| CH₄ | 2.1 | 4.4 |
| CO | 2.25 | 10.9 |
| C₂H₄ | 4 | 2.4 |
| C₃H₈ | 1.55 | 1.7 |
| Electrolyte vapor | 30 | 1.2-3.6 |

The table above shows the components and content of the emission mixed gas, which includes six combustible gases and one non-combustible gas. Among them, the content of electrolyte vapor varies due to the different proportions of electrolyte components in different battery cores, and the combustible limit of the electrolyte vapor is in a range of values (1.2%-3.6%). It should be noted that the electrolyte constituents include ethyl methyl carbonate, with a lower combustible limit of 1.2%, and ethylene carbonate, with a lower combustible limit of 3.6%. Regardless of the proportioning of the electrolyte, the combustible limit is within this range. Therefore, the combustible limit range of electrolyte vapor is 1.2%-3.6%.

Here, in order to calculate the combustible limit of the emission mixed gas, CO2 and H2 are paired to form a new constituent. The content and combustible limit of the components of the new mixed gas formed after pairing are as follows:

| Runaway gas components | Content/% | Combustible limit/% |
|---|---|---|
| CO₂+H₂ | 60.1 | 5.03 |
| CH₄ | 2.1 | 4.4 |
| CO | 2.25 | 10.9 |
| C₂H₄ | 4 | 2.4 |
| C₃H₈ | 1.55 | 1.7 |
| Electrolyte vapor | 30 | 1.2-3.6 |

When the combustible limit of the electrolyte vapor is 1.2%, the combustible limit of the emission mixed gas can be calculated as 2.487% according to the combustible limit calculation formula; when the combustible limit of the electrolyte vapor is 3.6%, the combustible limit of the emission mixed gas can be calculated as 4.246% according to the combustible limit calculation formula. It can be seen from this that when the concentration of the combustibles is less than 2% at any position in the air, the emissions emitted by the battery 100 are outside the combustible limit range and will not be ignited and burned.

The mass flow of the combustibles in the emissions through the exhaust hole 11 can be reduced to less than or equal to 0.05g/s through the treatment mechanism 30, so that the mass flow of the combustibles in the emissions from the battery 100 that is discharged out of the box 10 is less than or equal to 0.05g/s, so that when the emissions diffuse in the air, the concentration of the combustibles at any position in the air can be less than 2%, so that the combustibles discharged out of the box 10 are outside the combustion limit range, thereby effectively alleviating the phenomenon of fire and combustion of the emissions after being discharged out of the box 10, which is beneficial for reducing the use risk of the battery 100 during use to improve the reliability of the battery 100.

According to some embodiments of the present application, the present application further provides an electrical apparatus including the battery 100 described in any of the above solutions, and the battery 100 is used for providing electric energy to the electrical apparatus.

Here, the electrical apparatus may be any one of the above devices or systems using the battery 100.

According to some embodiments of the present application, the present application further provides an energy storage device including a plurality of batteries 100 of any one of the above solutions.

According to some embodiments of the present application, and referring to FIGS. 2 and 4, the present application provides a battery 100. The battery 100 includes a box 10, a treatment mechanism 30, and a plurality of battery cells 20. The plurality of battery cells 20 are all accommodated in the box 10. The box 10 has an exhaust hole 11 configured to discharge the emissions generated by thermal runaway of the battery cells 20. The treatment mechanism 30 is arranged at the box 10 and is used for reducing the mass flow of the combustibles in the emissions through the exhaust hole 11 to a preset value or below, and the preset value is 0.05g/s. The treatment mechanism 30 includes a flow limiting unit 31 and a treatment unit 32. The flow limiting unit 31 is a throttle valve arranged at the exhaust hole 11. The flow limiting unit 31 is used for controlling the flow of the emissions through the exhaust hole 11 to reduce the mass flow of the combustibles in the emissions through the exhaust hole 11. The treatment unit 32 is arranged in the box 10, and the treatment unit 32 is arranged to surround the plurality of battery cells 20. The treatment unit 32 is configured to adsorb the combustibles in the emissions; and/or, the treatment unit 32 is configured to oxidize and reduce the combustibles in the emissions to reduce the content of the combustibles in the emissions, thereby reducing the mass flow of the combustibles in the emissions through the exhaust hole 11.

It should be noted that in case of no conflicts, the embodiments in the present application and characteristics in the embodiments may be combined with each other.

The above are only preferred examples of the present application, and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery, comprising:
a battery cell;
a box used for accommodating the battery cell, the box having an exhaust hole configured to discharge emissions generated by thermal runaway of the battery cell; and
a treatment mechanism arranged at the box and used for reducing the mass flow of combustibles in the emissions through the exhaust hole.

2. The battery according to claim 1, wherein the treatment mechanism comprises:
a flow limiting unit arranged at the box and used for controlling the flow of the emissions through the exhaust hole to reduce the mass flow of the combustibles in the emissions through the exhaust hole.

3. The battery according to claim 2, wherein the flow limiting unit comprises a throttle valve arranged at the exhaust hole.

4. The battery according to claim 2 or 3, wherein the flow limiting unit comprises:
a gas storage member in communication with an interior of the box and configured to buffer the emissions generated by thermal runaway of the battery cell to control the flow of the emissions through the exhaust hole.

5. The battery according to claim 4, wherein the flow limiting unit further comprises:
a switch valve arranged at the exhaust hole and configured to open or close the exhaust hole; and
a detection member configured to detect the flow of the emissions through the exhaust hole;
when the flow of the emissions is greater than a threshold, the switch valve closes the exhaust hole, and the gas storage member is opened and buffers the emissions; and
when the flow of the emissions is less than or equal to the threshold, the switch valve opens the exhaust hole.

6. The battery according to any one of claims 1 to 5, wherein the treatment mechanism comprises:
a treatment unit arranged in the box and configured to reduce the content of the combustibles in the emissions so as to reduce the mass flow of the combustibles in the emissions through the exhaust hole.

7. The battery according to claim 6, wherein the treatment unit is configured to adsorb the combustibles in the emissions; and/or
the treatment unit is configured to oxidize and reduce the combustibles in the emissions.

8. The battery according to claim 6 or 7, wherein along a direction of a central axis of the exhaust hole, at least a part of the treatment unit is located between the battery cell and the exhaust hole.

9. The battery according to any one of claims 6 to 8, comprising a plurality of the battery cells, wherein the treatment unit is arranged to surround the plurality of battery cells.

10. The battery according to any one of claims 1 to 9, wherein the treatment mechanism is used for reducing the mass flow of the combustibles in the emissions through the exhaust hole to a preset value or below, and the preset value is 0.05g/s.

11. An electrical apparatus, comprising the battery according to any one of claims 1 to 10, the battery being used for providing electric energy.

12. An energy storage device, comprising a plurality of the batteries according to any one of claims 1 to 10.
